(19) **Europäisches Patentamt / European Patent Office / Office européen des brevets**

(11) **EP 4 671 710 A1**

(12) # EUROPEAN PATENT APPLICATION

(43) Date of publication:
**31.12.2025 Bulletin 2026/01**

(21) Application number: **24184798.7**

(22) Date of filing: **26.06.2024**

(51) International Patent Classification (IPC):
**G01J 5/00** *(2022.01)* **G01J 5/52** *(2022.01)*

(52) Cooperative Patent Classification (CPC):
**G01J 5/004; G01J 5/52;** G01J 5/05; G01J 5/0802;
G01J 5/802; G01J 2005/0077

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **Max-Planck-Gesellschaft zur Förderung der Wissenschaften e.V.**
**80539 München (DE)**

(72) Inventors:
• **Braun, Wolfgang**
**74321 Bietigheim-Bissingen (DE)**
• **Kolb, Frederik**
**87600 Kaufbeuren (DE)**

(74) Representative: **Manitz Finsterwald**
**Patent- und Rechtsanwaltspartnerschaft mbB**
**Martin-Greif-Straße 1**
**80336 München (DE)**

(54) **METHOD AND SYSTEM FOR DETERMINING A SOURCE TEMPERATURE IN A TLE SYSTEM**

(57) The invention relates to a method for determining a temperature (70) of a source material (20) of a TLE system (10) by a temperature determination system (30) comprising an optical detector system (40) and a processing unit (60), wherein the optical detector system (40) comprises a camera unit (42) for capturing images (46) of a thermal radiation (32) of the source material (20) and further comprises optical elements (50) for transferring and/or altering the emitted thermal radiation (32) between the source material (20) and the camera unit (42), wherein the processing unit (60) is constructed for analyzing the images (46) captured by the optical detector system (40),

wherein said analysis includes determining an intensity (80) of the thermal radiation (32) of the source material (20) in the images (46) captured by the optical detector system (40) and determining the temperature (70) of the source material (20) based on said determined intensity (80) by using a calibration. Further, the invention relates to a temperature determination system (30) capable of carrying out said method, and to a TLE system (10) comprising said temperature determination system (30).

Fig. 2

**Description**

The invention relates to a method for determining a temperature of a source material of a TLE system by a temperature determination system comprising an optical detector system and a processing unit, wherein the optical detector system comprises a camera unit for capturing images of a thermal radiation of the source material and further comprises optical elements for transferring and/or altering the emitted thermal radiation between the source material and the camera unit, wherein the processing unit is constructed for analyzing the images captured by the optical detector system, wherein said analysis includes determining an intensity of the thermal radiation of the source material in the images captured by the optical detector system and determining the temperature of the source material based on said determined intensity by using a calibration. Further, the invention relates to a temperature determination system for determining a temperature of a source material of a TLE system constructed to carry out said method. In addition, the invention relates to a TLE system comprising said temperature determination system.

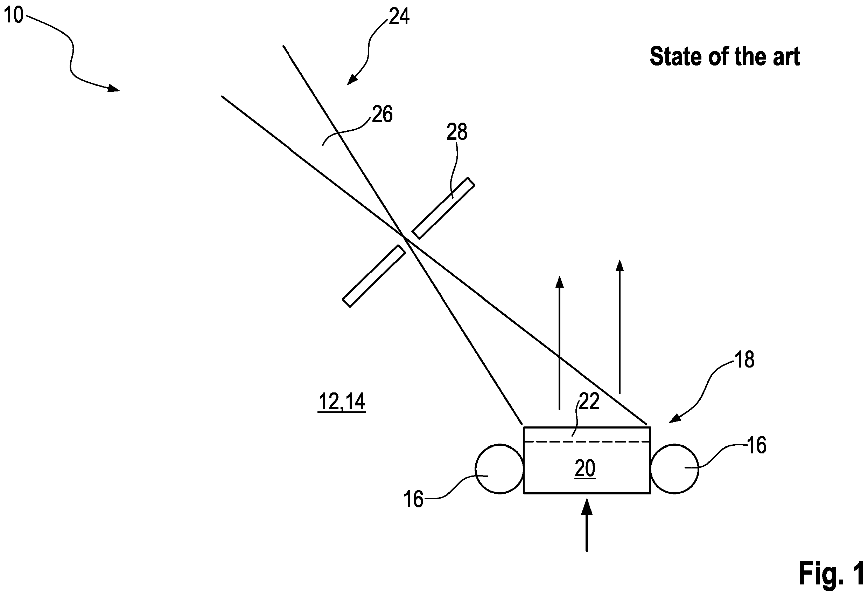

In most of the thermal laser epitaxy system 10 known in the state of the art, a laser beam 26 enters a reaction chamber 12 holding a reaction atmosphere 14, and an aperture 28 at its focal point reduces the coating of an entrance window, see Fig. 1. The continuous wave laser beam 26 heats a source material 20 by locally heating a spot on its top surface. The source material 20 is provided as source element 18 and arranged within the reaction chamber 12 by a source holder 16. Source material 20 evaporates or sublimates from this area upwards, usually towards a substrate (not shown) for coating the same. The source element 18 may be moved, sideways to position a spot of the laser beam 26 on its top surface, upwards to compensate for the material loss during evaporation or sublimation. Alternatively, the laser beam 26 may be moved with respect to the source element 18 to achieve the same effect.

In TLE processes, it is often necessary to determine the exact and absolute temperature of the laser heated source, in particular to obtain stable and reproducible fluxes for epitaxy. For instance, the material loss providing the basis for the above-mentioned upwards movement of the source element can be estimated based on the temperature of the source material. Especially, since evaporation or sublimation takes place dominantly from the hottest area directly underneath the impinging laser beam on its top surface, it is the temperature at this point which is the relevant quantity.

However, temperatures here can be very high, and, depending on the actual source material, several thousands of °C can be reached. Temperature sensors such as thermoelements will not work, since the temperatures are above the melting points of these devices. In addition, the highly intense laser radiation and the evaporating material provide additional challenges for the measurement.

In view of the above, it is an object of the present invention to provide an improved method for determining a temperature of a source material of a TLE system by a temperature determination system, an improved temperature determination system and an improved TLE system, which do not have the aforementioned drawbacks of the state of the art. In particular, it is an object of the present invention to provide an improved method, an improved temperature determination system, and an improved TLE system, which provide continuous temperature measurement also at high temperatures exceeding 2000-3000 °C in a precise and effective and simultaneously simple way.

This object is satisfied by the respective independent patent claims. In particular, this object is satisfied by a method for determining a temperature of a source material of a TLE system by a temperature determination system according to independent claim 1, by a temperature determination system for determining a temperature of a source material of a TLE system according to claim 13, and by a thermal laser epitaxy (TLE) system according to claim 16. The dependent claims describe preferred embodiments of the invention. Features and advantages described with respect to the method according to the first aspect of the present invention can also refer to a temperature determination system according to the second aspect of the present invention and also by a TLE system according to the third aspect of the present invention, and vice versa, if of technical sense.

According to a first aspect the invention the object is satisfied by a method for determining a temperature of a source material of a TLE system by a temperature determination system comprising an optical detector system and a processing unit, wherein the optical detector system comprises a camera unit for capturing images of a thermal radiation of the source material and further comprises optical elements for transferring and/or altering the emitted thermal radiation between the source material and the camera unit, wherein the processing unit is constructed for analyzing the images captured by the optical detector system, wherein said analysis includes determining an intensity of the thermal radiation of the source material in the images captured by the optical detector system and determining the temperature of the source material based on said determined intensity by using a calibration.

According to the method according to the present invention, the calibration comprises the following steps of

a) determining a relative relationship between an intensity of a thermal radiation emitted from an object and the respective temperature of said object in a temperature range including the melting point temperature of the source material;

b) heating of the source material, in particular by a source laser of the TLE system;

c) increasing the heating of the source material and simultaneously capturing images of the heated source material by the optical detector system;

d) identifying an onset of melting of the source material based on the images captured during execution of step c);

e) determining the intensity of the thermal radiation emitted by the source at the onset of melting identified in step d) as measured by the optical detector system, and

f) providing a calibration for the relationship determined in step a) by using the determined intensity determined in step e) and the known temperature of the melting point of the material of the source.

The method according to the first aspect of the present invention is intended to be carried out by a temperature determination system according to the second aspect of the present invention, and/or to be implemented in a TLE system according to the third aspect of the present invention comprising such a temperature determination system according to the second aspect of the present invention. However, the inventive method is not restricted to said intended usage. The method can in particular be carried out with any deposition system comprising a source material. Nevertheless, without concession of restriction, in the following the method is described as carried out by a TLE system.

The source material used in the respective TLE system preferably is provided as an elemental source material, namely consisting of a single element. In most of the cases said source material is provided in solid form. This means that a large variety of source materials can be provided particularly pure and free of impurities.

In particular, the method according to the present invention can be implemented in any TLE system in which a temperature determination system comprising an optical detector system and a processing unit is implemented. Said optical detector system is capable of capturing images of the source element, especially of a surface of the source material. In particular, the optical detector system at least comprises a camera unit capable of capturing images of the thermal radiation emitted from the source material. For that, the camera unit is preferably provided with a digital imaging sensor such as for instance a CCD sensor or a CMOS sensor. Said sensors also provide and limit a spatial resolution of the captured images. Thermal radiation in the sense of the present invention is not limited to a certain wavelength range, but encompasses any electromagnetic radiation emitted by the source material based on its temperature. It is to be noted that as camera unit in the sense of the present invention a conventional camera can be used. However, the camera unit of the present invention is not limited to this embodiment, and any optical detector capable of capturing images can be used as camera unit in the optical detector system of the temperature determination system according to the present invention.

The camera unit can capture said images continuously and/or repeatedly, whereby a time interval between subsequent images can be constant or flexible. Preferably, said interval between two subsequent images is no longer than 5 minutes, more preferably no longer than 1 second, even more preferably no longer than 20 milliseconds. A continuous or at least quasi-continuous survey of the source material can thereby be provided.

Further, the optical detector system comprises optical elements for transferring and/or altering the emitted thermal radiation between the source material and the camera unit. As mentioned above, during the evaporation and/or sublimation processes, evaporated and/or sublimated source material can be deposited on surfaces within the reaction chamber, in particular not only on the substrate to be coated but on all surfaces with a direct line of sight to the surface of the source material. By providing said optical elements, especially optical elements for transferring the radiation such as for instance mirrors, the camera unit can be arranged without the need for a direct line of sight, and hence the camera unit itself can be secured from an unwanted and harmful deposition of the evaporated and/or sublimated material. Optical elements for altering the radiation, such as for instance filters, can be used especially for increasing the safety and the sensitivity of the whole setup, for instance by providing wavelength filters adapted to the laser beam used in the TLE system for evaporating and/or sublimating the source material.

Further, the processing unit is capable of analyzing said images. Analyzing in the sense of the present invention especially encompasses inter alia determining an intensity of the respectively captured radiation, in particular with a spatial resolution provided by the respective camera unit. Also, a contrast of features in the captured image can preferably be identified by analyzing said images by the processing unit.

In particular, said intensity of the thermal radiation is strongly linked to the actual temperature of the source material emitting said thermal radiation. Said link is in principle clear and unambiguous, however, the whole setup of the temperature determination system comprising the optical detector system and the processing unit set boundary conditions which must be considered if one wants to draw conclusions about the temperature of the source material from the intensity, in particular from the intensity determined in the images by analysis.

According to the present invention, this is provided by a calibration, which is based on certain specific steps.

In a first step a) of the calibration, a relative relationship between an intensity of the thermal radiation emitted from an arbitrary object and the temperature of said object is determined, preferably calculated. Said relationship links the intensity to the temperature. In other words, for any given value of intensity, a respective value of temperature can be obtained by using the determined relationship. In particular, said relationship is unambiguous in the sense of that different intensity values are linked to respective different temperature values.

For practical reasons, said relationship must not cover all possible temperatures starting from 0 K to infinity. However, the respective temperature range, for which said relationship is determined in step a) of the method according to the present invention, is selected such that it includes the melting point temperature of the source material.

As mentioned above, said relative relationship is unambiguous. Nevertheless, it is only relative in the sense that it is determined for an ideal thermal radiation emitted from the theoretical object and is not yet adapted to the actual properties of the setup of the temperature determination system at hand.

In particular, it should be noted that the optical detector system is limited in its performance, e.g. due to intensity losses caused by the optical elements and/or limited sensitivity of the camera unit. Overall, the intensity determined by analyzing the images captured by the optical detector system may deviate by a constant factor from the ideal ratio of the relative relationship. In other words, the actual scaling of the ratio is not yet fixed. However, this is made possible by the following steps b) to f) of the method according to the invention.

In the second step b) of the method according to the present invention, the source material actually present in the respective TLE system is heated. Preferably, said heating is provided by a source laser of the TLE system. It is to be noted that prior to said start of the heating, the source element preferably is unheated, or at least heated to a temperature well below its melting point.

This heating is continued and raised in the following step c). Simultaneously, the optical detector system captures images of the source element, in particular registering the thermal radiation emitted by the source material. In other words, the source material emits thermal radiation according to its current temperature, the optical elements transfer and/or alter said thermal radiation towards the camera unit, and the camera unit captures images of the radiation finally reaching the camera unit, in particular the active sensor of the camera unit.

As already mentioned above, the source material is almost always provided in solid form, which especially holds true at the beginning of the heating process in step b), and hence also at the start of increasing said heating in step c). As the heating increases during step c), at a certain temperature, namely the melting point temperature, the source material will begin to melt. As the source material preferably is provided as elemental and hence pure source material, said temperature of the melting point is very specific for the respective source material and in most of the cases known with high precision.

Based on that, in the next step d), the images captured in step c) are used for identifying an onset of said melting of the source material. Said identification can be for instance by analyzing properties of the images such as color, brightness, contrast, and/or similar properties. In particular, as the images comprise a spatial resolution, also differences and/or an onset of differences of properties of certain areas of the images can be used for identifying an onset of melting of the source material.

Starting from the identification of the onset of melting of the source material present after execution of step d), in the following step e) an intensity of the thermal radiation corresponding to said onset of melting is determined. Corresponding in the sense of the present invention preferably encompasses a temporal correlation of the images, which show the onset of melting, and the images used for determining the respective intensity. Preferably, the same image or the same group of images is used for both tasks.

In particular, said intensity is determined by analyzing the images captured by the optical detector system. Hence, all of the above-mentioned intensity losses caused by the optical elements and/or limited sensitivity of the camera unit are included in the determined intensity.

It is to be noted that step d) and step e) of the method according to the present invention can be at least partially carried out simultaneously.

In summary, after execution of steps a) to e) of the method according to the present invention information is provided, which relative relationship between temperature and intensity of thermal radiation is present, and further also which thermal radiation intensity is actually determined by the temperature determination system when the source material is at a certain temperature, namely its melting temperature.

These findings are used in the final step f) of the method according to the present invention for providing a calibration of said relative relationship determined in step a) of the method according to the present invention. As mentioned above, the relative relationship links temperatures to a thermal radiation emitted by an object. Therefore, the intensity actually present in the relative relationship linked to the temperature of the melting point of the source material can be scaled by a factor to equal the actually determined intensity provided in step e). Said factor can subsequently be used to scale the relative relationship.

It is to be noted that the melting point of the source material is a particularly well-suited calibration point for a TLE system. The melting points of pure elements are known with high accuracy and widely available. In particular, the majority (71 %) of the elements in the periodic table have their melting points either in the typical working range used during TLE deposition, or at most two orders of magnitude in vapor pressure below or above. This ensures an easy application of the method, since it can be performed either during the standard heating/cooling cycle during the deposition process, or before or after without strongly changing the temperature. Being able to perform the melting point calibration close to the working point of the process also ensures a high accuracy, since the algorithmic temperature determination process, containing inaccuracies and systematic deviations due to approximations, will not extrapolate over large temperature ranges away from the calibration point.

In other words, in step f) of the method according to the present invention a calibration is provided by respectively scaling the relative relationship of step a) to match the actually determined intensity linked to the known melting temperature of the source material. Using said calibration, in other words the calibrated relationship, any intensity determined by the processing unit based on one or more images captured by the optical detector system can be linked to a respective temperature of the source material. Determining the temperature of the source material by the temperature determination system can thereby be rendered possible in an especially effective, reliable and repeatable way, wherein in particular no direct contact to the source material is needed.

It is to be noted that in TLE systems, the same flux of source material on the substrate can be achieved by either heating a larger area of the source material surface to a lower temperature, or a smaller area of the source material surface to a higher temperature. If the TLE system is equipped with an optical system that allows the laser beam to be projected on a smaller or larger area on the source material surface, the area of the spot of the laser beam on the source material can be adjusted based on the determined temperature. However, by implementing the method according to the present invention, and especially the calibration made available by the method according to the present invention, said temperature can be determined with high accuracy. Thereby, the melting point at the hottest point on the source material surface may be adjusted to be close, or even directly at the desired working point of the TLE process. This provides an improved process stability, since no or only a very small algorithmic extrapolation from the melting point is required.

According to an embodiment of the method according to the present invention, the source material can be heated until a melt pool has formed, and afterwards the following steps can be carried out:

c1) decreasing heating of the source material and simultaneously capturing images of the source material by the optical detector system;
d1) identifying an onset of solidifying of the melt pool based on the images captured during execution of step c1);
e1) determining the intensity of the thermal radiation emitted by the source at the onset of solidifying identified in step d1),

and wherein in step f) the measured intensity determined in step e1) is used in addition to the respective measured intensity determined in step e) for the calibration.

In steps c) to e) of the method according to the present invention the heating of the source material is increased and the onset of melting of the source material is used to pin down the temperature of the melting spot. However, when the source material is already provided in its molten state, decreasing the heating, and hence the temperature of the source material, leads to the opposite effect, namely that the molten and hence liquid source material again solidifies. However, this effect also takes place at the temperature of the melting point of the source material.

Hence, by firstly providing a melt pool of molten source material by sufficiently heating the source material, again preferably by the laser beam of the source laser of the TLE system, and afterwards successively decreasing the heating in step c1), an onset of solidifying of the source material can be initiated. Analogous to steps d) and e), the onset of said solidification can be identified by analyzing the images captured by the optical detector system in step d1), and likewise in step e1) a corresponding intensity actually determined from the images captured by the optical detector system can be determined in step e1). In other words, after step e1), there are two values for a determined intensity present linked to the temperature of the melting point of the source material, one of them originating from step e) and the other from step e1). By using both intensity values in step f) of the method according to the present invention, the accuracy of the provided calibration can be increased. For instance, a mean value can be calculated based on the two intensity values, and then said mean intensity can be used for scaling the relative relationship.

According to an embodiment of the method according to the present invention, for determining the relative relationship in step a), one or more, preferably all, of the following properties can be considered:

- an emissivity of the source material;
- a spectral grey body radiance of the source material;
- a spectral quantum efficiency of the camera unit;
- a reflectivity of reflecting optical elements; and
- a transmission of transmissive optical elements.

This list is not closed and also other suitable properties can be considered. By considering one or more, preferably all, of the listed properties, the relative relationship originally determined in step a) can be enhanced in that already actual properties of the setup are considered. The calibration by simply scaling the relative relationship by a factor can thereby be improved.

The emissivity describes the actual ability of an object, in the present case of the source material, to emit thermal radiation. It can vary between 0 (no emission of thermal radiation at all) and 1 (true black body emitter).

A spectral grey body radiance of an object, in the present case the source material, is the radiance of a black body, modified by an emissivity smaller than unity.

A spectral quantum efficiency of the camera unit, a reflectivity of reflecting optical elements, and/or a transmission of transmissive optical elements are properties of the optical detector system altering the intensity actually represented in the images captured by the optical detector system, in comparison to the intensity actually emitted by the source material.

According to an enhanced embodiment of the method according to the present invention, in step a) a temperature dependence and/or wavelength dependence of at least one of the considered properties may be considered. In a basic approach, the above-mentioned properties, especially the emissivity and the properties of the optical detector system, can be considered to be constant. However, by considering a temperature and/or wavelength dependency of one or more, preferably all, properties, the relative relationship originally determined in step a) can be enhanced further, and also the calibration by simply scaling the relative relationship by a factor can thereby be improved further.

According to an enhanced embodiment of the method according to the present invention, in step a) the relative relationship between the intensity and the temperature may be determined by numerically solving the intensity equation

$$I_{cam}(T) = A \int_0^\infty d\lambda \varepsilon B_0(\lambda, T) QE_\lambda(\lambda) t(\lambda),$$

for the temperature T,
with

|  |  |
|---|---|
| spectral radiance of a grey body: | $\varepsilon B_{\lambda,0}(\lambda, T) = \dfrac{2hc^2\varepsilon}{\lambda^5} \dfrac{1}{e^{\frac{hc}{\lambda kT}} - 1};$ |
| wavelength of the thermal radiation: | $\lambda$; |
| temperature: | $T$; |
| Planck constant: | $h$; |
| Boltzmann constant: | $k$; |
| speed of light: | $c$; |
| emissivity: | $\varepsilon$; |
| quantum efficiency: | $QE_\lambda$; |
| total spectral transmittance: | $t$; |

and wherein A is determined in the calibration provided in step f).

The intensity equation introduced in the previous paragraph has been found to be suited best for determining the relative relationship as preparation for the calibration. Numerically solving said intensity equation results in a corresponding intensity for each temperature T, hence results in the relative relationship of step a). Further, all above-mentioned properties, namely emissivity, gray body radiance, and properties of the optical detector system, are included in the intensity equation. The actual calibration is done by determining the constant factor A in step f) of the method according to the present invention.

According to an enhanced embodiment of the method according to the present invention, solving of the intensity equation may include numerically integrating the intensity equation for a wavelength region from 50 nm to 2500 nm, preferably from 200 nm to 1000 nm. As the intensity equation depends on the wavelength of the thermal radiation $\lambda$, limiting the numerical integration region to a certain wavelength range drastically reduces the computational effort while numerically solving the intensity equation. As described above, the intensity equation encompasses properties of the optical detector system. In most of the cases, especially the quantum efficiency of the camera unit limits the wavelength range in which the capture of images of the thermal radiation with meaningful intensity is possible. The wavelength region of 50 nm to 2500 nm, preferably of 200 nm to 1000 nm, has been found suited best for mapping the quantum efficiency regions of most of the widely used cameras suitable for an implementation in an optical detector system of a temperature determination system. Limiting the numerical integration to these wavelength regions hence can drastically reduce computational effort without cutting into accuracy of the determination of the relative relationship provided in step a).

According to an enhanced embodiment of the method according to the present invention, the intensity equation is solved for a temperature range of 100 K to 5000 K, preferably 300 K to 3750 K, and/or for temperature steps selected in the range of 0.1 K to 100 K, preferably with steps of 10 K. Similar to the limit in the wavelength region used for numerically solving the intensity equation, also the investigated temperature range, and also the used step-width, has strong influence on the computational effort while determining the relative relationship in step a). A temperature range of 100 K to 5000 K, preferably 300 K to 3750 K, covers all known melting temperatures of elemental source materials which can be provided in solid form. Hence, limiting numerically solving to said temperature range can reduce computational effort without cutting into the accuracy of the determination of the relative relationship provided in step a). Likewise, for the step-width, temperature steps selected in range of 0.1 K to 100 K, preferably with steps of 10 K. have been found suitable for most applications, wherein for temperature values in between two step points an interpolation can be provided to result in a smooth relative relationship in step a).

According to an embodiment of the method according to the present invention, in step d) the identification of the onset of melting, and/or if applicable in step d1) the identification of the onset of solidification, may be limited only by the spatial resolution of the camera unit. In other words, as soon as the spatial resolution of the camera unit allows an identification of the onset of melting, and/or if applicable of solidification, the actual onset is identified. Hence, by simply using a different camera unit with an improved spatial resolution, the identification of the respective onset can be provided more efficiently.

According to an embodiment of the method according to the present invention, the identification of the onset of melting in step d), and/or if applicable the onset of solidification on step d1), may be provided by at least one of the following measures:

- evaluation of statistical properties of the captured images (46),
- evaluating a brightness histogram of the captured images (46),
- evaluating a contrast of the captured images (46), and/or
- analysis of the captured images (46) by an algorithm based on artificial intelligence.

This list is not closed, and also other suitable measures can be used for the identification of the onset of melting in step d), and/or if applicable the onset of solidification on step d1).

Before melting, and also solidification, sets in, the respective surface is smooth and undisturbed, namely either completely solid or completely molten and hence liquid. Upon onset of melting of solidification, both states are present simultaneously, and a boundary may form between solid and liquid areas on the surface of the source material. As said different states of the source material in most cases comprise different optical properties, for instance with respect to reflectivity, ab-sorptance and/or roughness of the surface, said boundary, and hence an onset of melting and/or solidification, can effectively be spotted by evaluating statistical properties of the images, provided for instance as a brightness histogram, and/or of the contrast of the captured images, in particular the spatially resolved contrast. Another suitable measure, which can be used additionally or alternatively, is an analysis of the captured image by an algorithm based on artificial intelligence, trained especially for identifying changes in the captured images connected to said onset of melting or solidification, respectively.

According to an embodiment of the method according to the present invention, the calibration provided in step f) may include a subtraction of background signals. The whole temperature measurement is based on linking intensities determined from captured images. By including a subtraction of background signals in the calibration, a mis-determination of said intensities caused by said background signals can be reduced. Thereby, the quality of the determination of the intensities, and hence of the temperature determination as a whole, can be improved.

According to an enhanced embodiment of the method according to the present invention, the background signals may be determined based on images captured by the optical detector system at the beginning of the heating of the source material by the source laser of the TLE system, and/or based on a comparison of images captured by the optical detector system with and without the heating of the source material by the source laser of the TLE system, and/or based on a comparison of images captured by the optical detector system with and without the source material, but with switched on heating by the source laser of the TLE system.

At the beginning of the heating, the actual emission of thermal radiation has not started yet or is at least not yet significant. Hence, all incoming intensity at said beginning of the heating may originate from the background.

After switching on the heating, at least for a short time period the source material stays at the same temperature. Hence, any difference in determined intensity of images captured with and without heating cannot originate from thermal radiation emitted from the source material, and hence may be considered background.

Finally, if no source material is present in the system, any determined intensity can also not originate from the source material, and hence may be considered background.

According to an embodiment of the method according to the present invention, the calibration may be checked by repeating the execution of steps b) to f), and if applicable also steps c1) to e1). During operation of the TLE system, evaporated and/or sublimated source material is deposited onto a substrate likewise arranged within the reaction chamber. However, said evaporated and/or sublimated source material can also deposit on other areas within the reaction chamber, for instance on optical elements of the optical detector system. Also, a displacement of the source material with respect to the temperature determination system, for instance due to material loss and/or active movement, may alter the optical path of the optical detector system and/or a transmittance of the optical elements of the optical detector system. By re-doing the actual calibration by repeating the execution of steps b) to f), and if applicable also steps c1) to e1), said influences can be eliminated and the calibration of the temperature determination system can be ensured for longer time periods.

According to a second aspect the invention the object is satisfied by a temperature determination system for determining a temperature of a source material of a TLE system, comprising an optical detector system and a processing unit, wherein the optical detector system comprises a camera unit for capturing images of a thermal radiation of the source material and further comprises optical elements for transferring and/or altering the emitted thermal radiation between the source material and the camera unit, wherein said analysis includes determining an intensity of the thermal radiation of the source material captured by the optical detector system and determining the temperature of the source material based on said determined intensity by using a calibration, and wherein the temperature system is constructed to carry out the method according to one of the preceding claims.

The temperature determination system is capable of carrying out the method according to the first aspect of the present invention. Thereby, all features and advantages described in detail above can also be provided by a temperature determination system according to the second aspect of the present invention, which is constructed and capable of carrying out said method.

The temperature determination system according to the present invention can preferably be implemented in any TLE system.

The temperature determination system comprises a optical detector system and a processing unit. Said optical detector system is capable of capturing images of the source element, especially of a surface of the source material. In particular, the optical detector system at least comprises a camera unit capable of capturing images of the thermal radiation emitted from the source material. For that, the camera unit is preferably provided with a digital imaging sensor such as for instance a CCD sensor or a CMOS sensor. Said sensors also provide and limit a spatial resolution of the captured images. Thermal radiation in the sense of the present invention is not limited to a certain wavelength range, but encompasses any electromagnetic radiation emitted by the source material based on its temperature.

The camera unit can capture said images continuously and/or repeatedly, whereby a time interval between subsequent images can be constant or variable. Preferably, said interval between two subsequent images is no longer than 5 minutes, more preferably no longer than 1 second, even more preferably no longer than 20 milliseconds. A continuous or at least quasi-continuous survey of the source material can thereby be provided.

Further, the optical detector system comprises optical elements for transferring and/or altering the emitted thermal radiation between the source material and the camera unit. As mentioned above, during the evaporation and/or sublimation processes, evaporated and/or sublimated source material can be deposited on surfaces within the reaction chamber, in particular not only on the substrate to be coated but on all surfaces with a direct line of sight to the surface of the source material. By providing said optical elements, especially optical elements for transferring the radiation such as for instance mirrors, the camera unit can be arranged without the need for a direct line of sight, and hence the camera unit itself can be secured from an unwanted and harmful deposition of the evaporated and/or sublimated material. Optical elements for altering the radiation, such as for instance filters, can be used especially for increasing the safety of the whole setup, for instance by providing wavelength filters adapted to the laser beam used in the TLE system for evaporating and/or sublimating the source material.

Further, the processing unit is capable of analyzing said images. Analyzing in the sense of the present invention especially encompasses inter alia determining an intensity of the respectively captured radiation, in particular with a spatial resolution provided by the respective camera unit. Also, a contrast of features in the captured image can preferably be identified by analyzing said images by the processing unit.

In particular, said intensity of the thermal radiation is strongly linked to the actual temperature of the source material emitting said thermal radiation. By carrying out the method according to the first aspect of the present invention, the temperature determination system exploits said linkage and determines the temperature based on an intensity determined from images captured of the thermal radiation emitted from the source material.

According to an embodiment of the temperature determination system according to the present invention, wherein the camera unit may be a monochromatic camera. A monochromatic camera, in particular in comparison to multi-color cameras, comprises a sensitivity limited to a single color. In the actual technical implementation, this leads to a limited wavelength range of sensitivity, in particular compared to multi-color cameras. However, simultaneously the actual sensitivity for the selected wavelength range can be higher compared to multi-color cameras, and/or the spatial resolution can be enhanced. In summary, this results in a better temperature determination, as for a selected wavelength range the sensitivity and/or the spatial resolution can be enhanced.

According to an embodiment of the temperature determination system according to the present invention, the optical detector system may comprise one or more of the following optical elements:

- mirrors
- lenses
- protection filters

This list is not closed and also other suitable optical elements can be used as part of the optical detector system.

Mirrors allow changing the optical axis of the optical detector system, and hence to especially arrange other parts of the optical detector system inside the reaction chamber without direct line of sight to the source material. An unwanted deposition of evaporated and/or sublimated source material on these other parts can thereby be avoided or at least reduced drastically.

Lenses are suitable optical elements especially for focusing. Luminous efficacy of the whole setup of the optical detector system can thereby be enhanced.

Protection filters can be used for filtering out unwanted components of the radiation emerging along the optical path of the optical detector system. Especially light directly originating from the source laser can thereby be filtered out. Harm to the temperature determination system, and especially to any operator handling the temperature determination system and/or the TLE system as a whole, can thereby be avoided. In addition, the sensitivity of the optical detector system may be enhanced in this way, since the camera unit can be more sensitive to the detected radiation if the unwanted laser radiation, which may be many orders of magnitude more intense, is suppressed and therefore cannot damage a more sensitive sensor of the camera unit.

According to a third aspect the invention the object is satisfied by a thermal laser epitaxy (TLE) system, comprising a reaction chamber for holding a reaction atmosphere, a source holder for arranging a source element comprising a source material within the reaction chamber, and a source laser for heating and thereby thermally evaporating and/or sublimating the source material if arranged in the reaction chamber by the source holder, wherein the TLE system comprises a temperature determination system according to the second aspect of the present invention for determination of the temperature of the source material.

The TLE system according to the third aspect of the present invention comprises a temperature determination system according to the second aspect of the present invention. Further, the temperature determination system according to the second aspect of the present invention is capable of carrying out the method according to the first aspect of the present invention. Thereby, all features and advantages described in detail above with respect to both the method according to the first aspect of the present invention and the temperature determination system according to the second aspect of the present invention can also be provided by a TLE system according to the third aspect of the present invention, which comprises a temperature determination system according to the second aspect of the present invention constructed and capable of carrying out said method according to the first aspect of the present invention.

The TLE system may comprise all features and properties of usual TLE systems. In particular, the TLE system may comprise a substrate holder for arranging a substrate within the reaction chamber. On said substrate evaporated and/or sublimated source material can be deposited during the operation of the TLE system. In addition, also a substrate laser can be implemented for specifically heating the substrate.

According to an embodiment of the TLE system according to the present invention, at least some of the optical elements of the optical detector system may be arranged within the reaction chamber, and wherein the camera unit of the optical detector system is arranged outside of the reaction chamber.

Within the reaction chamber, preferably at least a mirror is arranged as optical element of the optical detector system of the temperature determination system. Said mirror can be used for diverting the thermal radiation emitted by the source material towards a transmission window in the reaction chamber, wherein said transmission window does no longer need a direct line of sight to the source material. Hence, an unwanted deposition of evaporated and/or sublimated source material on the transmission window can be prohibited or at least reduced drastically, for instance by arranging a shield within the reaction chamber and/or by providing the transmission window at the end of an elongated flange.

By arranging at least the camera unit outside of the reaction chamber, the camera unit can be effectively protected against the possible harmful environment within the reaction chamber. In particular, any electrical connection between the camera unit and the processing unit are outside of the reaction chamber, and thereby likewise protected against the possible harmful environment within the reaction chamber and additionally readily accessible if needed.

The invention will be explained in detail in the following by means of embodiments and with reference to the drawings. In particular, in the figures are shown:

Fig. 1    A schematic view of a TLE system of the state of the art,

Fig.2    A temperature determination system,

Fig. 3    Relative relationship between temperature and intensity,

Fig. 4    Spectral properties of elements of the optical detector system,

Fig. 5    Sensitivity of the optical detector system,

Fig. 6     Onset of melting on different source materials,

Fig. 7     Raw signal and determined temperature during calibration of a Tantalum source material, and

Fig. 8     Vapor pressures for a variety of source materials at their respective melting point.

Fig. 1 schematically shows of a TLE system 10 of the state of the art. In particular, some crucial parts of said TLE system 10 are depicted, namely the source element 18 and the laser beam 26 of the source laser 24. Also, the presence of a reaction atmosphere 14 contained by a reaction chamber 12 is indicated.

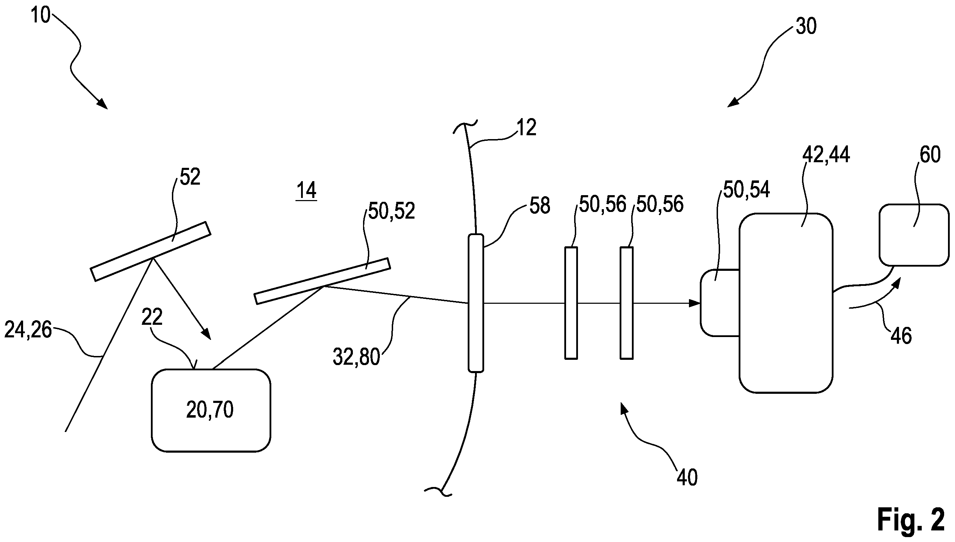

The source element 18 provides a source material 20 to be evaporated and/or sublimated within a reaction chamber 12 (see Fig. 2) of the TLE system 10. The source material 20 preferably is a pure and elemental source material 20, consisting of a single element. A source holder 16 of the TLE system 10 is used for arranging the source element 18 within the reaction chamber 12, wherein the source holder 16 further might be constructed to move the source element 18 and hence the source material 20, indicated by an arrow depicted below the source element 18.

During operation of the TLE system 10, the laser beam 26 impinges onto a surface of the source material 20. In the case of thermal evaporation, a melt pool 22 forms on said surface, and the source material 20 is thermally evaporated from said melt pool 22, indicated by two arrows drawn above the source element 18.

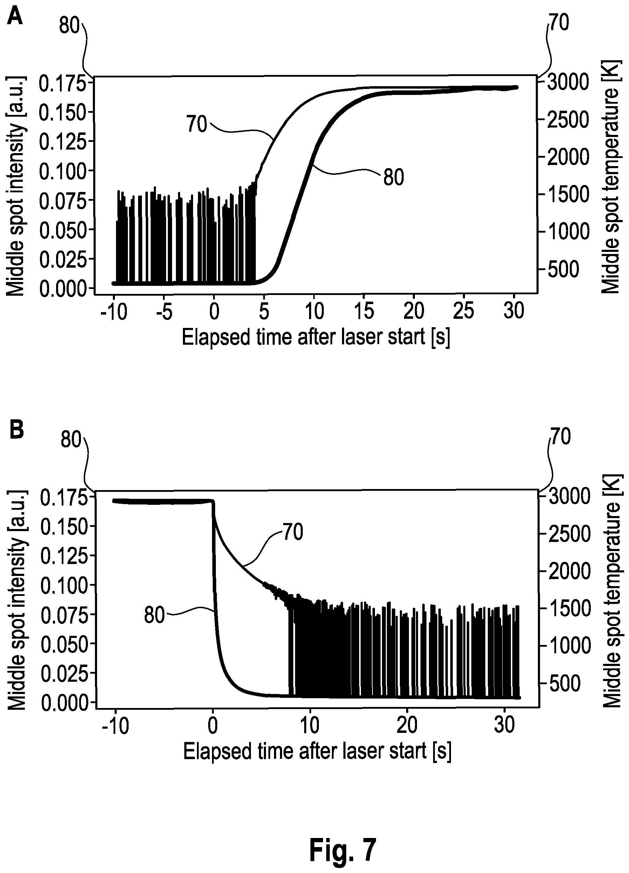

For ensuring an optimal operation of the TLE system 10, measuring a temperature 70 (see Fig. 7) of the source material 20 is necessary. In Fig. 2, a temperature determination system 30 according to the present invention capable of this task is depicted.

The temperature determination system 30 comprises two main components, namely an optical detector system 40 and a processing unit 60. As depicted in Fig. 2, within the reaction chamber 12, which also contains the reaction atmosphere 14, source material 20 is evaporated and/or sublimated by the laser beam 26 of the source laser 24. As depicted, a mirror 52 can preferentially be arranged within the reaction chamber 12 for deflecting the laser beam 24, thereby prohibiting an unwanted deposition of evaporated and/or sublimated source material 20 onto a laser entry window of the reaction chamber 12. However, if the pressure of the reaction atmosphere 14 in the reaction chamber 12 is so high that the vaporized starting material 20 does not reach the window without having been scattered by gas molecules such as $O_2$, which would react most non-transparent metals to form transparent oxides, a mirror 52 within the reaction chamber 12 is not absolutely necessary.

While heated by the laser beam 26, the source material 20 emits thermal radiation 32 corresponding to its actual temperature 70. Optical elements 50 of the optical detector system 40 transfer said thermal radiation 32 towards a camera unit 42 of the optical detector system 30. In the depicted embodiment, a monochromatic camera 44 is used.

The optical elements 50 can also alter some properties of the thermal radiation 32. For instance, filters 56 can be used to suppress unwanted wavelength rages. In particular, said filter 56 can be constructed for suppressing the wavelength of the source laser 24. This can increase the overall safety during operation of the TLE system 10, as unwanted and potentially harmful leakage of scattered light from the laser beam 26 is prevented.

Additionally, or alternatively, lenses 54 can be used as optical elements 50 of the optical detector system 40, in particular for focusing the thermal radiation 32 emitted by the source material 20. At least some of said lenses 54 can also be provided as part of the camera unit 42 of the optical detector system 44.

Further, also mirrors 52 can be used as optical elements 50. As depicted, one of said mirrors 52 can preferably be arranged within the reaction chamber 12. This helps preventing a deposition of evaporated and/or sublimated source material 20 onto a transmission window 58 of the reaction chamber 12. In addition, especially the camera unit 42 can be positioned outside of the reaction chamber 12. This allows on the one hand an easy access to the camera unit 42, for instance for a data communicating connection to the processing unit 60, and on the other hand protects the camera unit 42 against the possible harmful environment within the reaction chamber 12, including but not limited to the reaction atmosphere 14. A continuous and undisturbed surveillance of the source material 20 by the temperature determination system 30 can thereby be provided.

During operation of the TLE system 10, the camera unit 42 captures images 46 of the thermal radiation 32 emitted by the source material 20. Said images 46 are transferred to the processing unit 60. The processing unit 60 analyzes the images 46 and determines an intensity 80 of the respective thermal radiation 32. By using a previously performed calibration, based on said intensity 80 extracted from the captured images 46, the actual temperature 70 of the source material 20 is determined.

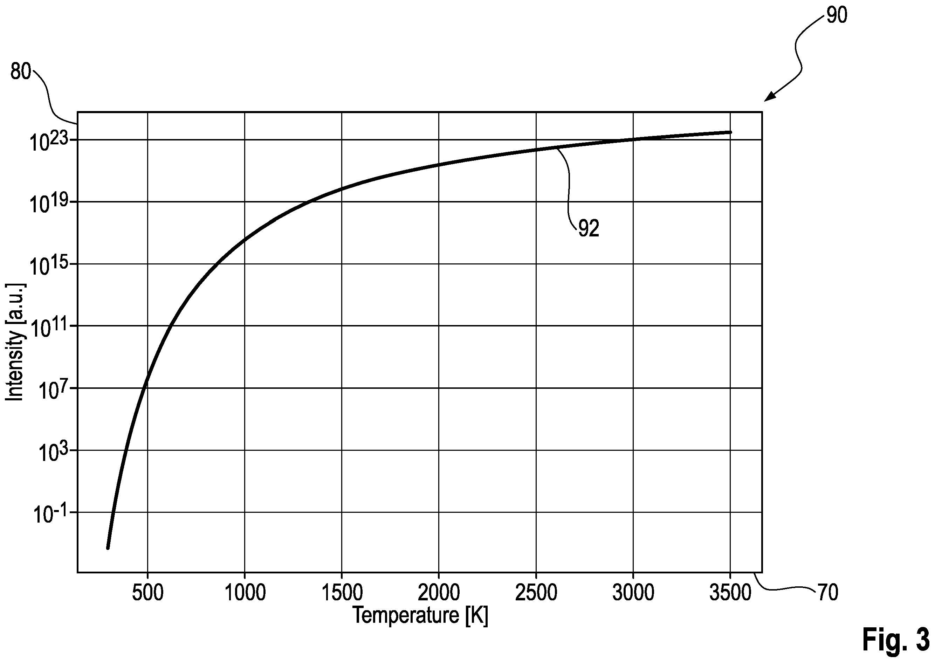

In the following, the aforementioned calibration is described with reference to Fig. 3 to 7, in respect to which steps a) to f) of the method according to the present invention are described.

As first step a) of the method according to the present invention, for the calibration a relative relationship 90 between the temperature 70 and an intensity 80 of a thermal radiation 32 (see Fig. 2) of an object is calculated, preferably according to the intensity equation stated above, see Fig. 3.

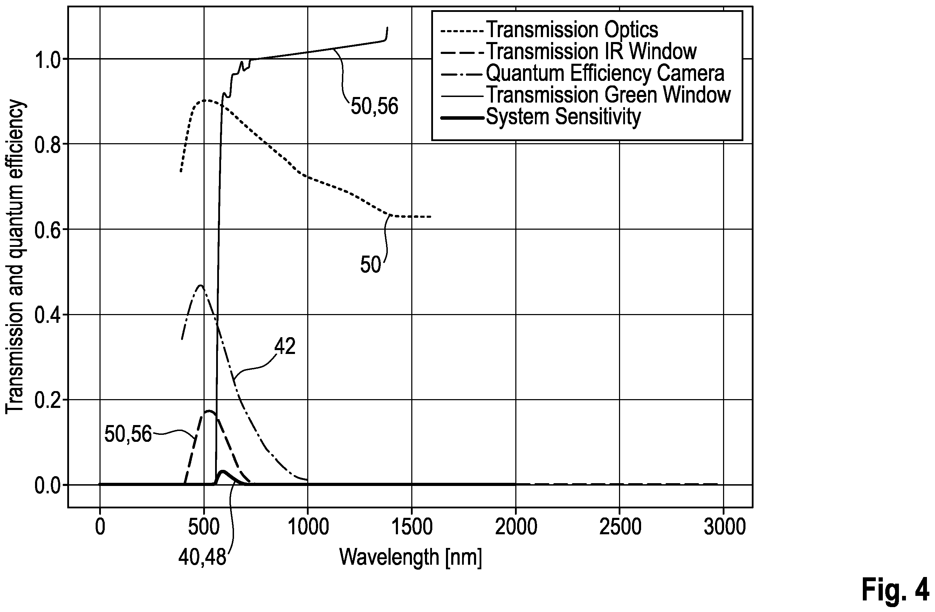

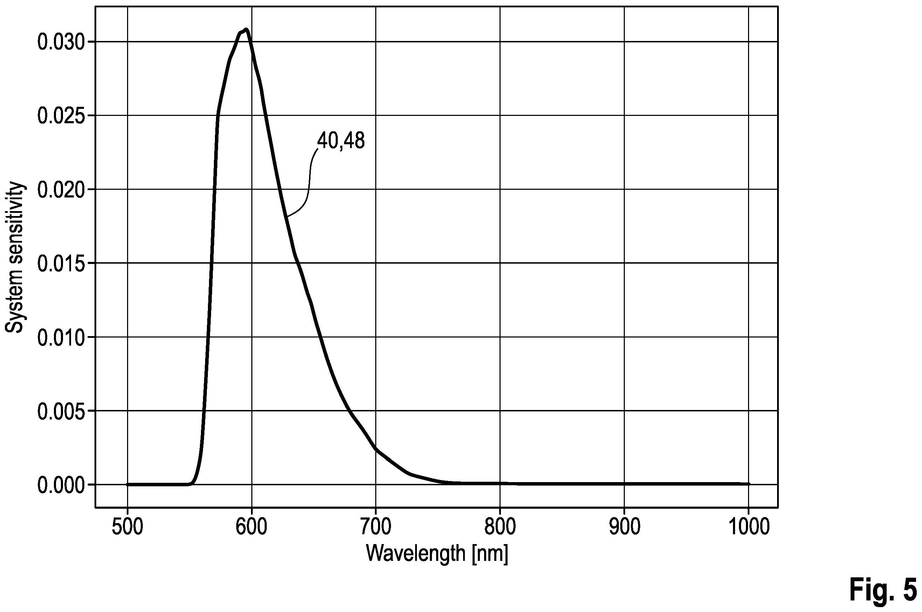

In addition, also properties of the optical detector system can be included and considered in said relative relationship 90. Such properties are for instance a spectral quantum efficiency of the camera unit 42 and properties of optical elements 50 of the optical detector system 40 such as reflectivity of reflecting optical elements 50 and/or transmission of transmissive optical elements 50. Said properties are depicted in Fig. 4. In Fig. 4, 5 also an overall sensitivity 48 of the optical detector system 40 is depicted, in which all of the properties of the optical detector system 40 are combined. In Fig. 4 said sensitivity 48 is shown together with the properties of the individual components of the optical detector system 40, Fig. 5 depicts solely an enlarged version of said resulting combined sensitivity 48.

As clearly visible in Fig. 4, said properties considered in relative relationship 90 may comprise a wavelength dependency. Additionally, but not depicted, also a temperature dependency is possible. Hence, said dependencies are preferably considered when determining the relative relationship 90.

Preferably, the relative relationship 90 is determined by numerically solving an intensity equation 92 for the temperature T70. Said intensity equation 92 can especially be based on a theoretical spectral grey body radiation. In particular, $I_{cam}(T) = A \int_0^\infty d\lambda \varepsilon B_0(\lambda, T) QE_\lambda(\lambda) t(\lambda)$ may be used as intensity equation 92, wherein $\varepsilon B_{\lambda,0}(\lambda, T)$ is the aforementioned spectral grey body radiation, and $QE_\lambda$ incudes the total quantum efficiency of the optical detector system which corresponds to the aforementioned sensitivity 48 of the optical detector system 40.

As said sensitivity 48 is different from essentially zero only in a limited wavelength range, see Fig. 5, limiting numerically solving of the intensity equation 92 to a certain wavelength range, for instance from 50 nm to 2500 nm, preferably from 200 nm to 1000 nm, does not alter the resulting relative relationship 90.

Likewise, also the temperature range relevant for an operation of TLE systems 10 is not infinite. Hence, in particular for performance reasons, simplifying the determination of the relative relationship 90 can also be provided without significant accuracy losses by solving the intensity equation 92 only for a temperature 70 range of 100 K to 5000 K, preferably 300 K to 3750 K, and/or for temperature 70 steps selected in range of 0.1 K to 100 K, preferably with steps of 10 K.

However, as visible in Fig. 3, for an actual calibration said relative relationship 90 needs further steps, as the temperature 70 is linked to an intensity 80 measured in "arbitrary units". However, as for the determination of the relative relationship 90 various influences of the actual setup of the TLE system 10 and the temperature determination system 30 are already considered, a scaling of the relative relationship 90 by a constant factor is sufficient in general. In the above-presented version of the intensity equation 92, said factor is represented by A.

For the determination of said factor, it is used that the temperature 70 of the melting point of the source material 20 is known. Hence, by determining the intensity 80 extracted by the processing unit 60 from images 46 captured by the optical detector system 40 from thermal radiation 32 of the source material 20 at its melting temperature 70, said factor A can be determined by comparing the intensity 80 in arbitrary units of the relative relationship 90 of Fig. 3 with the actually determined intensity 80 from the temperature determination system 30 at said melting temperature 70.

For identifying the source material 20 at its melting temperature 70, steps b) to d) of the method according to the present invention are carried out.

First of all, in step b) the source material 20 is heated, preferably by the laser beam 26 of the source laser 24 of the TLE system 10, see Figs. 1, 2. At this stage, the temperature 70 of the source material 20 is below the melting point, the source material 20 is solid.

Subsequently, the heating of the source material 20 is increased. Simultaneously, the optical detector system 40 captures images 46 of the thermal radiation 32 emitted by the source material 20. These actions are performed in step c).

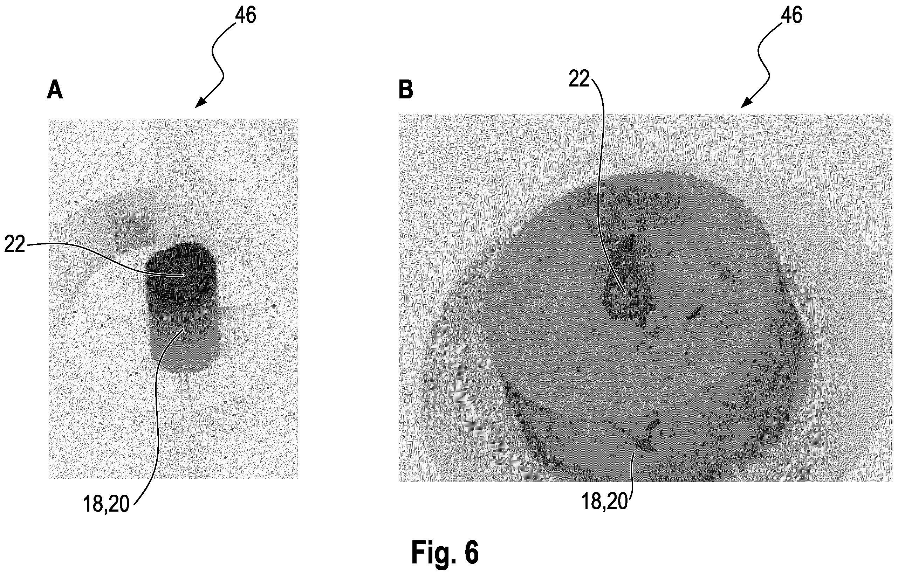

In the next step d) by analyzing the images 46 captured in step c) by the processing unit 60, an onset of melting of the source material 20 can be identified. This is depicted in Fig. 6, wherein the picture on the left depicts a source element 18 comprising Tantalum as source material 20, and the picture on the right shows a source element 18 comprising Copper as source material 20. In both cases, on the visible upper surface of the source material 20, the formation of a melt pool 22 has begun, indicating the onset of melting of the source material 20 and hence allowing the identification of the melting temperature 70 of the respective source material 20. Said melt pool 22 can for instance be identified by evaluating a contrast of the respective captured images 46. Preferably, said identification is only limited by a spatial resolution of the camera unit 42.

After identification of the onset of melting, the respective image 46 or group of images 46 are analyzed by the processing unit 60, and an actually captured intensity 80 is determined for the melting temperature 70. This is done during step f) of the method according to the present invention, and used for calculating the scaling factor for the relative relationship 90 of Fig. 3 for finalizing the calibration.

Preferably, the above described calibration in step f) also comprises a subtraction of background signals. Said background signals can be determined by dedicated measurements with different conditions concerning with/without heating by the source laser 24, with/without installed source element 18, or by analyzing images 46 captured at the beginning of heating while no or at least no significant contribution to the signal by thermal radiation 32 of the source material 20 is expected.

In the paragraphs above, the identification of the source material 20 at its melting temperature 70 is described with respect to a rising temperature 70. However, in addition, also starting this identification with an already established melt pool 22 and a subsequent decrease of temperature 70 is possible. For that, in a step c1) the heating is decreased and again simultaneously images 46 are captured, which are used in step d) for identifying an onset of solidification of the melt pool 22. As said solidification happens at the same melting temperature 70, a determined corresponding intensity 80 (step e1)) can be used in already-described step f) together with the already determined intensity 80 derived from the onset of melting for the calibration, in particular for determining the actual scaling factor for the relative relationship 90.

In summary, by said calibration the relative relationship 90 shown in Fig. 3 can be anchored at a precisely determined pair of captured intensity 80 at a well-known temperature 70, namely the melting temperature 70 of the respective source material 20. This allows determining an unknown temperature 70 of the source material 80 by analyzing the intensity 70 determined based on captured images 46 of the thermal radiation 32 emitted by the source material 20.

This is shown in Fig. 7, wherein for measurements of Tantalum as source material 20 respective diagrams are sown, in subfigure A for the case of switching on the heating by the source laser 24, in subfigure B the reverse case of switching off the heating. In both diagrams, the captured intensity 80 and the reconstructed temperature 70, respectively, are shown.

As is clearly visible, if the captured intensity 80 is below a certain value, small variations in captured intensity 80 lead to significant differences in the determined temperature 70. However, these small intensities 80 are linked to small temperatures 80 of the source material 20 not used during normal operation of the TLE system 10. However, for higher temperatures 70, the two diagrams clearly demonstrate the ability of the temperature determination by the temperature determination system 30 according to the present invention, especially after performing the calibration procedure described in the method according to the present invention.

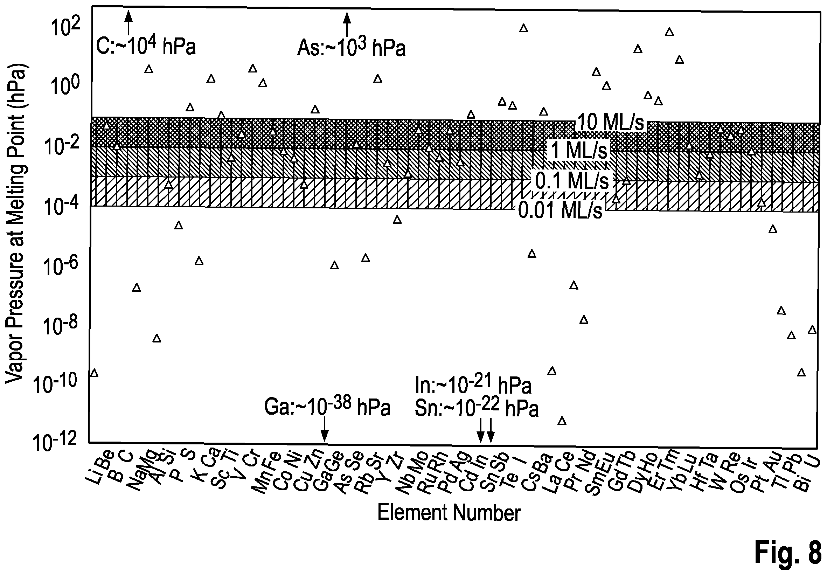

In Fig. 8, for a vast variety of source materials 20 their vapor pressures at their respective melting points are depicted. In particular, the melting points of pure elements, which are especially suitable as source materials 20, are known with high accuracy and widely available. Hence, the melting point temperatures of such pure elements used as source materials 20 are well-suited calibration points for a TLE system 10 (see Figs. 1, 2). As clearly visible, a majority of the elements in the periodic table have their vapor pressures linked to their respective melting points either in the typical working range used during TLE deposition, or at most two orders of magnitude in vapor pressure below or above. This ensures an easy application of the method according to the present invention, since it can be performed either during the standard heating/cooling cycle during the deposition process, or before or after without strongly changing the temperature. Being able to perform the melting point calibration as provided by the method according to the present invention close to the working point of the process also ensures a high accuracy, since the algorithmic temperature determination process, containing inaccuracies and systematic deviations due to approximations, will not extrapolate over large temperature ranges away from the calibration point.

List of references

10   TLE system
12   reaction chamber
14   reaction atmosphere
16   source holder
18   source element
20   source material
22   melt pool
24   source laser
26   laser beam
28   aperture

30   temperature determination system
32   thermal radiation

40   optical detector system
42   camera unit
44   monochromatic camera
46   image
48   sensitivity

50   optical element

52    mirror
54    lens
56    filter
58    transmission window

60    processing unit

70    temperature

80    intensity

90    relationship
92    intensity equation

**Claims**

1.  Method for determining a temperature (70) of a source material (20) of a TLE system (10) by a temperature determination system (30) comprising an optical detector system (40) and a processing unit (60),

    wherein the optical detector system (40) comprises a camera unit (42) for capturing images (46) of a thermal radiation (32) of the source material (20) and further comprises optical elements (50) for transferring and/or altering the emitted thermal radiation (32) between the source material (20) and the camera unit (42),
    wherein the processing unit (60) is constructed for analyzing the images (46) captured by the optical detector system (40),
    wherein said analysis includes determining an intensity (80) of the thermal radiation (32) of the source material (20) in the images (46) captured by the optical detector system (40) and determining the temperature (70) of the source material (20) based on said determined intensity (80) by using a calibration,
    wherein the calibration comprises the following steps of

       a) determining a relative relationship (90) between an intensity (80) of a thermal radiation (32) emitted from an object and the respective temperature (70) of said object in a temperature (70) range including the melting point temperature (70) of the source material (20);
       b) heating of the source material (20), in particular by a source laser (24) of the TLE system (10);
       c) increasing the heating of the source material (20) and simultaneously capturing images (46) of the heated source material (20) by the optical detector system (40);
       d) identifying an onset of melting of the source material (20) based on the images (46) captured during execution of step c);
       e) determining the intensity (80) of the thermal radiation (32) emitted by the source at the onset of melting identified in step d) as captured by the optical detector system (40), and
       f) providing a calibration for the relationship (90) determined in step a) by using the determined intensity (80) determined in step e) and the known temperature (70) of the melting point of the material of the source.

2.  The method according to claim 1,

    wherein the source material (20) is heated until a melt pool (22) has formed, and wherein afterwards the following steps are carried out:

       c1) decreasing heating of the source material (20) and simultaneously capturing images (46) of the source material (20) by the optical detector system (40);
       d1) identifying an onset of solidifying of the melt pool (22) based on the images (46) captured during execution of step c1);
       e1) determining the intensity (80) of the thermal radiation (32) emitted by the source at the onset of solidifying identified in step d1),

    and wherein in step f) the measured intensity (80) determined in step e1) is used in addition to the respective measured intensity (80) determined in step e) for the calibration.

3.  The method according to claim 1 or 2,

wherein for determining the relative relationship (90) in step a), one or more, preferably all, of the following properties are considered:

- an emissivity of the source material (20);
- a spectral grey body radiance of the source material (20);
- a spectral quantum efficiency of the camera unit (42);
- a reflectivity of reflecting optical elements (50); and
- a transmission of transmissive optical elements (50).

4. The method according to claim 3,
wherein in step a) a temperature dependence and/or wavelength dependence of at least one of the considered properties is considered.

5. The method according to claim 3 or 4,

wherein in step a) the relative relationship (90) between the intensity (80) and the temperature (70) is determined by numerically solving an intensity equation (92)

$$I_{cam}(T) = A \int_0^\infty d\lambda \varepsilon B_0(\lambda, T) QE_\lambda(\lambda) t(\lambda),$$

for the temperature (70) T,
with

spectral radiance of a grey body:    $\varepsilon B_{\lambda,0}(\lambda, T) = \frac{2hc^2\varepsilon}{\lambda^5} \frac{1}{e^{\frac{hc}{\lambda kT}} - 1};$

wavelength of the thermal radiation (32):    $\lambda$;
temperature (70):    $T$;
Planck constant:    $h$;
Boltzmann constant:    $k$;
speed of light:    $c$;
emissivity:    $\varepsilon$;
quantum efficiency:    $QE_\lambda$;
total spectral transmittance:    $t$;

and wherein A is determined in the calibration provided in step f).

6. The method according to claim 5,
wherein solving of the intensity equation (92) includes numerically integrating the intensity equation (92) for a wavelength region from 50 nm to 2500 nm, preferably from 200 nm to 1000 nm.

7. The method according to claim 5 or 6,
wherein the intensity equation (92) is solved for a temperature (70) range of 100 K to 5000 K, preferably 300 K to 3750 K, and/or for temperature (70) steps selected in the range of 0.1 K to 100 K, preferably with steps of 10 K.

8. The method according to one of the preceding claims,
wherein in step d) the identification of the onset of melting, and/or if applicable in step d1) the identification of the onset of solidification, is limited only by the spatial resolution of the camera unit (42).

9. The method according to one of the preceding claims,
wherein the identification of the onset of melting in step d), and/or if applicable the onset of solidification on step d1), is provided by at least one of the following measures:

- evaluation of statistical properties of the captured images (46),
- evaluating a brightness histogram of the captured images (46),

- evaluating a contrast of the captured images (46), and/or
- analysis of the captured images (46) by an algorithm based on artificial intelligence.

10. The method according to one of the preceding claims,
wherein the calibration provided in step f) includes a subtraction of background signals.

11. The method of claim 10,

wherein the background signals are determined based on images (46) captured by the optical detector system (40) at the beginning of the heating of the source material (20) by the source laser (24) of the TLE system (10), and/or based on a comparison of images (46) captured by the optical detector system (40) with and without the heating of the source material (20) by the source laser (24) of the TLE system (10), and/or based on a comparison of images (46) captured by the optical detector system (40) with and without the source material (20), but with switched on heating by the source laser (24) of the TLE system (10).

12. The method of one of the preceding claims,
wherein the calibration is checked by repeating the execution of steps b) to f), and if applicable also steps c1) to e1).

13. Temperature determination system (30) for determining a temperature (70) of a source material (20) of a TLE system (10), comprising an optical detector system (40) and a processing unit (60),

wherein the optical detector system (40) comprises a camera unit (42) for capturing images (46) of a thermal radiation (32) of the source material (20) and further comprises optical elements (50) for transferring and/or altering the emitted thermal radiation (32) between the source material (20) and the camera unit (42), wherein the processing unit (60) is constructed for analyzing the images (46) captured by the optical detector system (40), wherein said analysis includes determining an intensity (80) of the thermal radiation (32) of the source material (20) captured by the optical detector system (40) and determining the temperature (70) of the source material (20) based on said determined intensity (80) by using a calibration, and wherein the temperature (70) system is constructed to carry out the method according to one of the preceding claims.

14. The temperature determination system (30) according to claim 13,
wherein the camera unit (42) is a monochromatic camera (44).

15. The temperature determination system (30) according to claim 13 or 14, wherein the optical detector system (40) comprises one or more of the following optical elements (50):

- mirrors (52)
- lenses (54)
- protection filters (56)

16. Thermal laser epitaxy (TLE) system (10), comprising a reaction chamber (12) for holding a reaction atmosphere (14), a source holder (16) for arranging a source element (18) comprising a source material (20) within the reaction chamber (12), and a source laser (24) for heating and thereby thermally evaporating and/or sublimating the source material (20) if arranged in the reaction chamber (12) by the source holder (16),
wherein the TLE system (10) comprises a temperature determination system (30) according to one of the preceding claims 13 to 15 for determination of the temperature (70) of the source material (20).

17. The TLE system (10) according to claim 16,
wherein at least some of the optical elements (50) of the optical detector system (40) are arranged within the reaction chamber (12), and wherein the camera unit (42) of the optical detector system (40) is arranged outside of the reaction chamber (12).

**State of the art**

**Fig. 1**

Fig. 2

**Fig. 3**

EP 4 671 710 A1

Fig. 4

EP 4 671 710 A1

**Fig. 5**

Fig. 6

Fig. 7

Fig. 8

# EUROPEAN SEARCH REPORT

**Application Number**

EP 24 18 4798

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2022/395904 A1 (LOCK TOMAS [SE] ET AL) 15 December 2022 (2022-12-15) | 1-15 | INV.<br>G01J5/00 |
| Y | * paragraphs [0019], [0030] - [0076] *<br>* figures 1-3 * | 16,17 | G01J5/52 |
| X | ALTENBURG SIMON J ET AL: "Towards the determination of real process temperatures in the LMD process by multispectral thermography",<br>PROCEEDINGS OF THE SPIE, SPIE, US,<br>vol. 11743, 12 April 2021 (2021-04-12),<br>pages 117430B-117430B, XP060142591,<br>ISSN: 0277-786X, DOI: 10.1117/12.2587881<br>ISBN: 978-1-5106-5738-0 | 1,3-15 | |
| Y | * the whole document * | 16,17 | |
| Y | THOMAS J SMART ET AL: "Thermal laser evaporation of elements from across the periodic table",<br>ARXIV.ORG, CORNELL UNIVERSITY LIBRARY, 201 OLIN LIBRARY CORNELL UNIVERSITY ITHACA, NY 14853,<br>23 March 2021 (2021-03-23), XP081915362,<br>DOI: 10.2351/7.0000348 | 16,17 | **TECHNICAL FIELDS SEARCHED (IPC)**<br><br>G01J |
| A | * the whole document * | 1-15 | |

-/--

The present search report has been drawn up for all claims

| Place of search | Date of completion of the search | Examiner |
|---|---|---|
| Munich | 8 December 2024 | Haller, Mirjam |

page 1 of 2

Europäisches Patentamt
European Patent Office
Office européen des brevets

# EUROPEAN SEARCH REPORT

Application Number
EP 24 18 4798

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | IRACE P H ET AL: "An investigation of thermal radiation from laminar diffusion flames in a tri-coflow burner with central oxygen", COMBUSTION AND FLAME, ELSEVIER SCIENCE PUBLISHING CO., INC., NEW YORK, NY.; US, AMSTERDAM, NL, vol. 242, 5 May 2022 (2022-05-05), XP087102516, ISSN: 0010-2180, DOI: 10.1016/J.COMBUSTFLAME.2022.112158 [retrieved on 2022-05-05] * page 3 - page 4 * ----- | 3-7 | |
| A | CAMPBELL ANDREW: "Measurement of temperature distributions across laser heated samples by multispectral imaging radiometry", REVIEW OF SCIENTIFIC INSTRUMENTS, AMERICAN INSTITUTE OF PHYSICS, 2 HUNTINGTON QUADRANGLE, MELVILLE, NY 11747, vol. 79, no. 1, 15 January 2008 (2008-01-15), pages 15108-15108, XP012114583, ISSN: 0034-6748, DOI: 10.1063/1.2827513 * page 4 - page 5 * ----- | 3-5,10, 11 | TECHNICAL FIELDS SEARCHED (IPC) |

The present search report has been drawn up for all claims

1

| Place of search | Date of completion of the search | Examiner |
|---|---|---|
| Munich | 8 December 2024 | Haller, Mirjam |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 18 4798

This annex lists the patent family members relating to the patent documents cited in the above-mentioned European search report.
The members are as contained in the European Patent Office EDP file on
The European Patent Office is in no way liable for these particulars which are merely given for the purpose of information.

08-12-2024

| Patent document cited in search report | Publication date | Patent family member(s) | Publication date |
|---|---|---|---|
| US 2022395904 A1 | 15-12-2022 | NONE | |

EPO FORM P0459

For more details about this annex : see Official Journal of the European Patent Office, No. 12/82